# EUROPEAN PATENT APPLICATION

(11) **EP 4 614 419 A1**
(43) Date of publication of application: **10.09.2025**
(21) Application number: 23891649.8
(22) Date of filing: 16.11.2023
(51) Int. Cl.: G06Q 30/0201, G06Q 30/0203, G06Q 30/0282

(54) **INFORMATION PROVIDING DEVICE, METHOD, AND PROGRAM**

(30) Priority: 17.11.2022 JP 2022184104
(71) Applicant: Fancrew Inc., Tokyo 101-0032 (JP)
(72) Inventor: YAMAGUCHI, Takato, Tokyo 101-0032 (JP); TOKUDA, Shuji, Tokyo 101-0032 (JP); KUROKI, Katsumi, Tokyo 101-0032 (JP)
(74) Representative: Gulde & Partner
(86) International application number: PCT/JP2023/041249
(87) International publication number: WO 2024/106502

(57) **Abstract**

Problem: provided is an information providing device, a method, and a program capable of quantifying a contribution degree of an evaluation factor with respect to a revisit intention or a recommendation intention of a customer with high accuracy.

Solution: An information providing device includes a survey data acquisition means configured to acquire evaluation data including evaluation values for evaluation items related to a revisit intention, repurchase intention, or recommendation intention for others from customers, a multivariate analysis means configured to calculate contribution degrees of explanatory variables with respect to an objective variable by conducting a multivariate analysis using an evaluation value for the revisit intention, repurchase intention, or recommendation intention for others as the objective variable, and evaluation values for evaluation items in the evaluation data as the explanatory variables, and an analysis result output means configured to display an analysis result from the multivariate analysis means on an information terminal. The evaluation data includes an evaluation item of a first level corresponding to the objective variable, evaluation items of a second level that explain the objective variable, and evaluation items of a third level that explain evaluation items of the second level. The multivariate analysis means is configured to execute a first multivariate analysis using an evaluation value for an evaluation item of the second level as an intermediate objective variable, and evaluation items of the third level as explanatory variables, and execute a second multivariate analysis using an evaluation item of the first level as an objective variable and evaluation items of the second level as explanatory variables.

## Description

### TECHNICAL FIELD

The present invention relates to an information providing device, a method, and a program for providing information contributing to a revisit intention, a repurchase intention, or a recommendation intention of a customer. The program according to the present invention is software executable on a computer, and can be stored in a computer-readable storage medium, such as a CD-ROM, DVD, USB flash drive, HDD, and Solid State Drive (SSD). Target stores in the present invention include not only physical stores (real stores) but also stores in virtual spaces.

### BACKGROUND ART

Conventionally, results of monitoring survey and in-store questionnaires are aggregated to analyze evaluations by customers on a target store, and it is utilized for improving the service of the target store. In Patent Document 1, there has been known a technique of displaying a state of mind (for example, the satisfaction level is high or low) of customers to a target store superimposed on map information of the target store.

Patent Document 1: JP-A-2013-089035

### DISCLOSURE OF THE INVENTION

### PROBLEMS TO BE SOLVED BY THE INVENTION

However, in the conventional methods including Patent Document 1, the simply aggregated survey results and questionnaire results are displayed, and it was not possible to determine which factors contributed to the customers' intention to revisit or recommend, or the extent to which each factor contributed.

It is an object of the present invention to provide an information providing device, a method, and a program capable of quantifying a contribution degree of an evaluation factor with respect to a revisit intention, a repurchase intention, or a recommendation intention of a customer with high accuracy.

### SOLUTIONS TO THE PROBLEMS

In the service industry, while operation quality improvement measures are advised to increase a revisit rate, they are not proposals corresponding to the operation quality of the store and expectations of the customers, and there is a problem that the improvement effect is limited. The inventors made a hypothesis that the background of the problem is the operation quality of the store and the expectations of the customers changing corresponding to the contents of the store, the state of improvement effort of the store, the customer segment, and the like. In product sales, for the improvement of repurchase rate (repeat intention), it is important to accurately obtain an evaluation factor affecting the repurchase intention, which is used to improve the product and improve promotional creatives. Then, the inventors invented an information providing device and a program conducive to proposing an effective measure to improve the revisit rate by conducting a factor analysis of an evaluation element expected to be effective on revisit or repurchase (repeat purchase), then collecting a statistically significant number of customer evaluations, and conducting a statistical analysis on a change on a time-series basis (multiple regression analysis, covariance structure analysis, and the like are used depending on the collected parameters).

(1) An information providing device according to the present invention includes a survey data acquisition means, a multivariate analysis means, and an analysis result output means. The survey data acquisition means is configured to acquire evaluation data including evaluation values for evaluation items from customers. The evaluation data includes evaluation values for evaluation items related to a revisit intention, repurchase intention, or recommendation intention for others. The multivariate analysis means is configured to calculate contribution degrees of explanatory variables with respect to an objective variable by conducting a multivariate analysis based on the evaluation data using an evaluation value for the revisit intention, repurchase intention, or recommendation intention for others as the objective variable, and evaluation values for evaluation items in the evaluation data as the explanatory variables. The analysis result output means is configured to display an analysis result from the multivariate analysis means on an information terminal capable of communicating via a network. The evaluation data includes an evaluation item of a first level corresponding to the objective variable, evaluation items of a second level that explain the objective variable, and evaluation items of a third level that explain evaluation items of the second level. The multivariate analysis means is configured to execute a first multivariate analysis using an evaluation value for an evaluation item of the second level as an intermediate objective variable, and evaluation items of the third level as explanatory variables, and execute a second multivariate analysis using an evaluation item of the first level as an objective variable and evaluation items of the second level as explanatory variables. Here, the evaluation values for evaluation items from customers are, for example, evaluation items for a target store, a target product, or a target service.
(2) In the above-described information providing device of (1), the analysis result output means can be configured to concurrently display time-series variation of the explanatory variables and time-series variation of an evaluation value for the revisit intention, repurchase intention or recommendation intention for others on the information terminal.
(3) In the above-described information providing device of (1) or (2), the time-series variation of the explanatory variables can be time-series variation of evaluation values for evaluation items of the second level.
(4) In the above-described information providing device of any of (1) to (3), evaluation values for evaluation items of the second level can include an evaluation value for an evaluation item about a perceived fit.
(5) In the above-described information providing device of any of (1) to (4), the multivariate analysis means can be configured to execute: a primary multivariate analysis to execute a first-first multivariate analysis using an evaluation value for an evaluation item of the second level as an objective variable, and evaluation values for evaluation items of the third level as explanatory variables, and a first-second multivariate analysis using an evaluation value for an evaluation item of the first level as an objective variable, and evaluation values for evaluation items of the second level as explanatory variables; and a secondary multivariate analysis to execute a second-first multivariate analysis using an explanatory variable of the second level used in the primary multivariate analysis other than a specific explanatory variable as an objective variable, and evaluation values for evaluation items of the third level as explanatory variables, and a second-second multivariate analysis using evaluation values for evaluation items of the second level as explanatory variables. The multivariate analysis means can further include a function to output differences between contribution degrees of respective explanatory variables in the primary multivariate analysis and contribution degrees of respective explanatory variables in the secondary multivariate analysis.
(6) In the above-described information providing device of any of (1) to (5), the multivariate analysis means can include a factor analysis multivariate analysis function to extract a common factor by conducting a factor analysis of evaluation values for evaluation items of the third level, and execute a multivariate analysis using the extracted common factor as an explanatory variable of the second level, and an evaluation value for an evaluation item of the first level as an objective variable. The analysis result output means can further include a function to display, based on the factor analysis multivariate analysis function, explanatory variables of the second level that explain an objective variable of the first level and contribution degrees of the explanatory variables of the second level, and explanatory variables of the third level that explain explanatory variables of the second level and contribution degrees of the explanatory variables of the third level on the information terminal in a tree structure.
(7) In the above-described information providing device of any of (1) to (6), evaluation items of the third level can be evaluation items of a subordinate concept of evaluation items of the second level.
(8) An information providing method of the present invention is an information providing method executed by a computer. The method includes: a step of acquiring evaluation data including evaluation values for evaluation items from customers, the evaluation data including evaluation values for evaluation items related to a revisit intention, repurchase intention, or recommendation intention for others; a step of calculating an evaluation value for the revisit intention, repurchase intention, or recommendation intention for others based on the evaluation data; and a multivariate analysis step of calculating contribution degrees of explanatory variables with respect to an objective variable by conducting a multivariate analysis using an evaluation value for the revisit intention, repurchase intention, or recommendation intention for others as the objective variable, and evaluation values for evaluation items in the evaluation data as the explanatory variables. The information providing method includes displaying an analysis result in the multivariate analysis step on an information terminal capable of communicating via a network. The evaluation data includes an evaluation value for an evaluation item of a first level corresponding to the objective variable, evaluation values for evaluation items of a second level that explain the objective variable, and evaluation values for evaluation items of a third level that explain evaluation items of the second level. The multivariate analysis step includes executing a first multivariate analysis using an evaluation value for an evaluation item of the second level as an intermediate objective variable, and evaluation values for evaluation items of the third level as explanatory variables, and executing a second multivariate analysis using an evaluation value for an evaluation item of the first level as an objective variable, and evaluation values for evaluation items of the second level as explanatory variables. Here, the evaluation values for evaluation items from customers are, for example, evaluation items for a target store, a target product, or a target service.
(9) A program (or a storage medium that stores the program) of the present invention is a program that causes a computer to function as: a means for acquiring evaluation data including evaluation values for evaluation items from customers, the evaluation data including evaluation values for evaluation items related to a revisit intention, repurchase intention, or recommendation intention for others; a means for calculating an evaluation value for the revisit intention, repurchase intention, or recommendation intention for others based on the evaluation data; and a multivariate analysis means for calculating contribution degrees of explanatory variables with respect to an objective variable by conducting a multivariate analysis using an evaluation value for the revisit intention, repurchase intention, or recommendation intention for others as the objective variable, and evaluation values for evaluation items in the evaluation data as the explanatory variables; and a means for displaying an analysis result from the multivariate analysis means on an information terminal capable of communicating via a network. The evaluation data includes an evaluation value for an evaluation item of a first level corresponding to the objective variable, evaluation values for evaluation items of a second level that explain the objective variable, and evaluation values for evaluation items of a third level that explain evaluation items of the second level. The multivariate analysis means includes executing a first multivariate analysis using an evaluation value for an evaluation item of the second level as an intermediate objective variable, and evaluation values for evaluation items of the third level as explanatory variables, and executing a second multivariate analysis using an evaluation value for an evaluation item of the first level as an objective variable, and evaluation values for evaluation items of the second level as explanatory variables. Here, the evaluation values for evaluation items from customers are, for example, evaluation items for a target store, a target product, or a target service.

### EFFECTS OF THE INVENTION

According to the present invention, the contribution degree of the evaluation factor with respect to the revisit intention, the repurchase intention, or the recommendation intention of customers can be quantified with high accuracy.

### BRIEF DESCRIPTION OF THE DRAWINGS

Fig. 1 is a block diagram of an information providing system according to a first embodiment.
Fig. 2 is a drawing describing functions of an information providing device according to the first embodiment.
Fig. 3 is a drawing illustrating an exemplary survey sheet for a monitoring survey in the embodiment.
Fig. 4 is a drawing illustrating an exemplary survey sheet for a questionnaire survey in the embodiment.
Fig. 5 is a drawing describing a multivariate analysis means according to the first embodiment.
Fig. 6 is a drawing illustrating an analysis result indicating contribution degrees of respective explanatory variables with respect to a revisit intention in a specific eating place.
Fig. 7 is a drawing illustrating an analysis result indicating contribution degrees of respective explanatory variables with respect to a revisit intention in a specific hair salon.
Fig. 8 is a drawing illustrating an analysis result indicating contribution degrees of respective explanatory variables including a perceived fit with respect to the revisit intention in a specific eating place.
Fig. 9 is a drawing illustrating an analysis result indicating contribution degrees of respective explanatory variables including a perceived fit with respect to the revisit intention in a specific hair salon.
Fig. 10 is a graph illustrating transitions of the contribution degrees of respective evaluation factors with respect to the revisit intention on a time-series basis.
Fig. 11 is a drawing describing a comparative analysis function according to a second embodiment, Fig. 11(A) is a drawing illustrating a result of primary multiple regression analysis, and Fig. 11(B) is a drawing illustrating a result of secondary multiple regression analysis.
Fig. 12 is a drawing describing a first relational path diagram according to a third embodiment.
Fig. 13 is a drawing describing a second relational path diagram (factor analysis path diagram) according to a third embodiment.

### DESCRIPTION OF PREFERRED EMBODIMENTS

### <First Embodiment>

An information providing system 1 of the first embodiment is configured to clarify a time-series transition of an evaluation factor that affects a revisit intention or a recommendation intention through an analysis of time-series variations of evaluation factors in a store with a specific business name, and the information providing system 1 has a configuration described below.

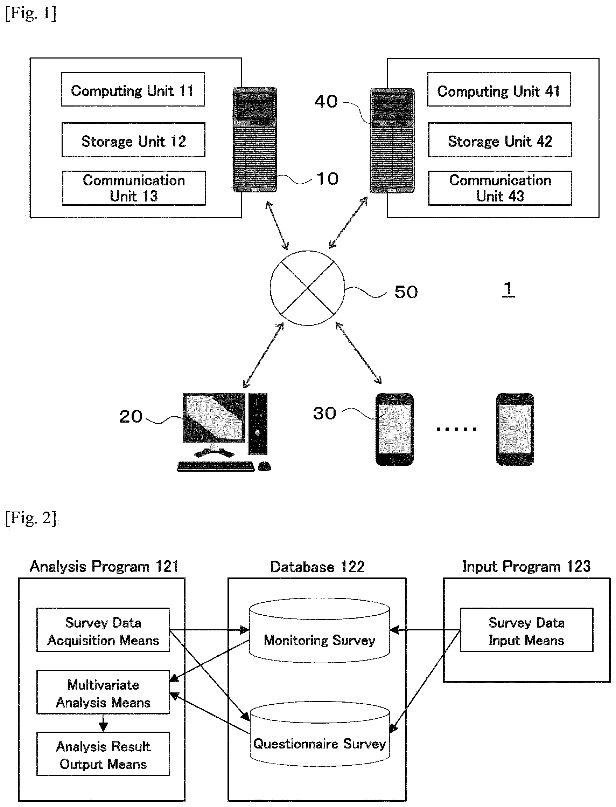

Fig. 1 is a block diagram of the information providing system according to the embodiment. As illustrated in Fig. 1, the information providing system 1 according to the embodiment includes an information providing device 10 that functions as a server, a management information terminal 20 that functions as a management client, an information terminal 30 that a customer uses, a survey data collecting device 40, and Internet 50. In the example illustrated in Fig. 1, while the numbers of the information providing devices 10, the management information terminals 20, and the survey data collecting devices 40 are each one, the configuration is not limited thereto, and the numbers thereof may be each two or more.

The information providing device 10 is, for example a PC server, and includes a computing unit 11, a storage unit 12 that stores an analysis program 121, and a communication unit 13 that allows communication with the information terminal 30 and the survey data collecting device 40.

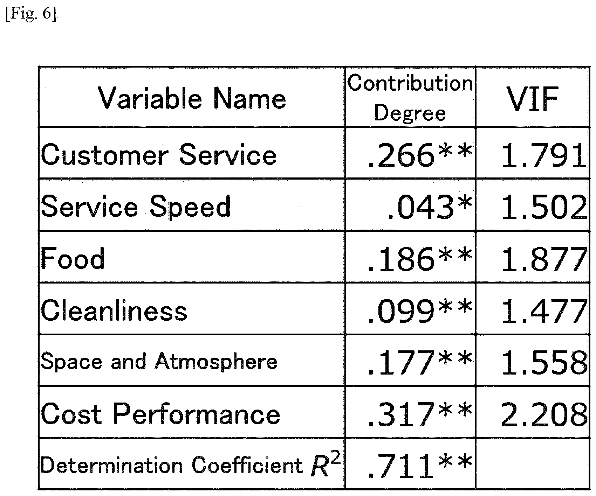

The management information terminal 20 is an information terminal for performing data input operations to the information providing device 10 and the survey data collecting device 40 and execution operations of the analysis program 121 and a survey data collection program 141, and is, for example, a personal computer. By executing the analysis program 121 described below, various analysis results (for example, Fig. 6 to Fig. 13) can be output to a display device of the management information terminal 20.

The information terminal 30 is an information terminal that a customer uses, and is used for inputting survey data to a database 122. In the example of Fig. 1, while the information terminal 30 as a smartphone is disclosed, the information terminal 30 is not limited thereto and can be configured of any information terminal, such as a personal computer and a tablet, which runs a web browser.

The survey data collecting device 40 is, for example a PC server, and includes a computing unit 41, a storage unit 42 that stores the database 122 and an input program 123, and the communication unit 13 that allows communication with the information providing device 10 and the information terminal 30. The input program 123 includes a survey data input means that provides the database 122 with a web page allowing an input of survey data from the information terminal 30.

While the embodiment employs, for acquiring the survey data, a configuration in which answers to questionnaires are input by a store user from the information terminal 30 using a web browser according to the input program 123, a configuration in which the survey data collected from customers by other means, such as a paper medium, is processed and uploaded from the management information terminal 20 to the database 122 may be employed.

As illustrated in Fig. 2, the computing unit 11 of the information providing device 10 executes the analysis program 121 stored in the storage unit 12, thereby achieving (1) a survey data acquisition means, (2) a multivariate analysis means, and (3) an analysis result output means. The following describes each of the means.

### (1) Survey Data Acquisition Means

The survey data acquisition means is a means for storing the survey data used in the multivariate analysis means in the storage unit 12. In this embodiment, a screen to which a query for acquiring the survey data from the database 122 is input is provided to the management information terminal 20. The survey data according to the embodiment is data on a customer satisfaction level based on the answers from the store users, and includes two kinds of data, monitoring survey data and questionnaire survey data.

The monitoring survey in the embodiment is a survey in which a monitor (surveyor) actually uses a service of a store, and answers predetermined questions based on his/her own experience. In the monitoring survey, since a reward is paid to the surveyor, the number of questions can be increased. On the other hand, compared with the questionnaire survey, it is difficult to conduct a reliable multivariate analysis with only the monitoring survey depending on the number of N in some cases.

The questionnaire survey in the embodiment is an in-store questionnaire with predetermined evaluation items, the number of questions is a half or less of the monitoring survey, and includes questions appropriate for conducting the multivariate analysis. On the other hand, compared with the monitoring survey, the number of N can be increased (for example, one hundred or more can be collected in single month for one store), therefore, the questionnaire survey is appropriate for conducting a statistical analysis. Since the number of N is large in the questionnaire survey, an evaluation trend for each customer segment categorized by attributes such as gender, age, and region, can be obtained.

In this embodiment, the monitoring survey data and the questionnaire survey data can be used in combination, and while allowing the statistical analysis on the strength of influence of major evaluation items on an overall satisfaction level by business type, issues can be obtained at specific business levels through the monitoring survey.

The evaluation items listed on each survey sheet are, for example, items regarding Quality Service Cleanliness Atmosphere (QSCA). For a target store in the food and beverage category, items of "customer service," "service speed," "food," "cleanliness," "space and atmosphere," "cost performance," and the like are exemplified. For a target store in the beauty category, items of "customer service," "counseling," "technique," "cleanliness," "atmosphere," "cost performance," and the like are exemplified.

In any business category, questions required to compute regression with the revisit intention are set. Questions for computing regression with a recommendation intention for others whether to want to recommend the use of the target store to other people may be set.

The above-described items are examples, and tens of items may be set depending on the business type (category) and scale of the target store, season, and the like.

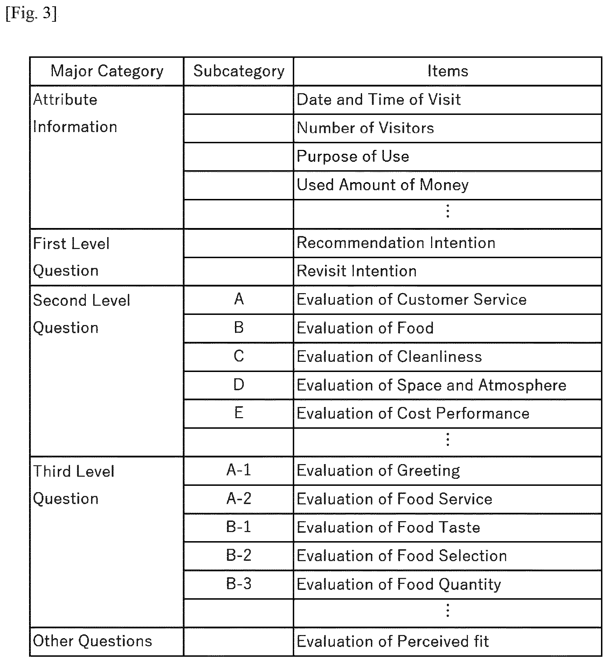

Fig. 3 is a drawing illustrating an exemplary survey sheet for a monitoring survey in the embodiment.

In each item of attribute information, attribute information of a surveyor who performs the monitoring survey is input. Information on age, gender, residence, and the like of the monitoring surveyor is preliminarily registered, and therefore not filled on the survey sheet.

A first level question includes a recommendation intention and a revisit intention. The first level question is used as an objective variable in a multiple regression analysis described below. An evaluation of the first level question is, for example, a multi-level evaluation of 0 to 10 points. A second level question is a factor affecting the first level question as the objective variable. A third level question is an explanatory variable when the multiple regression analysis is conducted using the second level question as a dependent variable. Here, the second level question and the third level question are in a relation of a superordinate concept and a subordinate concept. For example, the subordinate concept of "evaluation of customer service" in a subcategory A of the second level question is "evaluation of greeting" and "evaluation of food service" in a subcategory A of the third level question. However, the third level question is not necessarily set for all the minor categories of the second level question. As another question corresponding to the second level question, an evaluation of perceived fit is set. The question about the perceived fit is, for example, an evaluation in multi levels to a question about "Do you feel our store suits your taste?" While a third level question for describing the question about the perceived fit is not set in this embodiment, the third level question may be set.

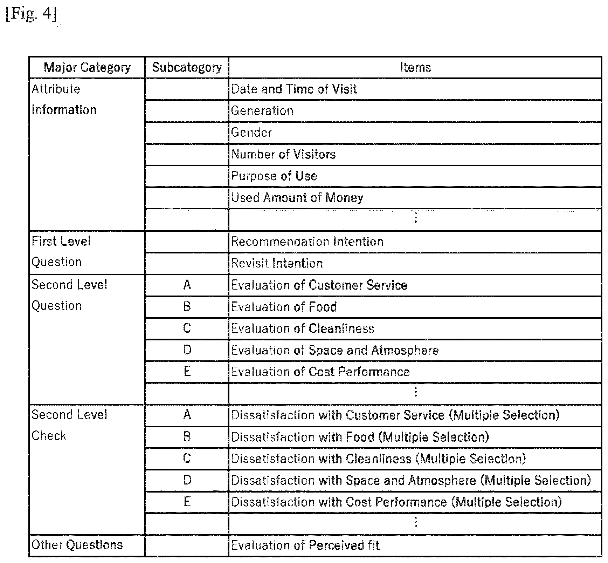

Fig. 4 is a drawing illustrating an exemplary survey sheet for a questionnaire survey in the embodiment.

In each item of attribute information, attribute information of a questionnaire respondent is input. Since the questionnaire respondent is not a registered respondent like the surveyor of the monitoring survey, the questionnaire respondent inputs information on age, gender, and the like.

A first level question is the same as that of the monitoring survey, and includes items of the recommendation intention and the revisit intention. **In** the questionnaire survey, to reduce the load on the customer as a respondent, the number of questions used as observation variables is set to be small, and in this embodiment, a second level question and a second level check constitute the questions. Here, the second level question and the second level check correspond to one another in the subcategory. For example, the second level check corresponding to "evaluation of customer service" in the subcategory A of the second level question is "dissatisfaction with customer service (multiple selection)." From another perspective, the second level check can be explained as one with which the third level question performed in the multi-level evaluation is replaced in two-level evaluation. Also in the questionnaire survey, as another question corresponding to the second level question, the evaluation of perceived fit is set.

The perceived fit in the embodiment is a preference structure of an individual A expressed as a variable, for example, a preference of an individual for an object, a feeling of preference to an option b over an option a of the individual A, an efficacy b greater than an efficacy a. The perceived fit is positioned as a variable including a lifestyle factor, a reference group effect, and the like with a comfort or a harmony with respect to a space and atmosphere of the survey target as an explanatory variable. By including the perceived fit considering the preference of the respondent of the monitoring survey and the questionnaire survey in the evaluation items, a function that allows outputting a correlation between the perceived fit and the clustered customer attribute may be provided to the multivariate analysis means described below.

### (2) Multivariate Analysis Means

The multivariate analysis means of the embodiment analyzes how the respective evaluation items affect a score of the recommendation intention and a score of the revisit intention (hereinafter referred to as a "revisit intention score") by a multiple regression analysis. Here, the regression analysis is a statistical method for clarifying a relation between a value indicating result (objective variable) and a value as a factor (explanatory variable), and the multiple regression analysis means a statistical method for predicting the future by quantifying which explanatory variable influences the result and how the influence is when explaining the objective variable.

Quantifying the magnitude of the influence of the explanatory variable through the multiple regression analysis facilitates designing a method for improving the service. Further, the future of the variation of the objective variable due to the expected variation of the explanatory variable can be predicted.

In this embodiment, an evaluation factor that can be improved by an effort is set to the explanatory variable, and an evaluation factor difficult to be improved by the effort, for example, location and appearance, is not set to the explanatory variable. Specifically, "customer service," "food," "cleanliness," "space and atmosphere," "cost performance," "perceived fit," and the like are set to the explanatory variables of an eating place, and the monitoring survey and the questionnaire survey with the evaluation items corresponding to the explanatory variables and the evaluation items for calculating the revisit intention score as the questions were conducted. Fig. 6 is a drawing illustrating an exemplary result of calculating contribution degrees of the respective explanatory variables with respect to the revisit intention score (objective variable) by the multiple regression analysis when the target store is an eating place. Here, Variance Inflation Factor (VIF) is an indicator in an evaluation of multicollinearity in the multiple regression analysis. The multicollinearity indicates a high relevance between the explanatory variables, and when the VIF has a large value, it is considered that the variable is to be removed from the analysis. Here, a determination coefficient (R2) is an indicator that indicates how the predicted value of the objective variable obtained through the multiple regression analysis matches the actual value of the objective variable. Generally, the closer the determination coefficient is to 1, the higher the explanatory power is.

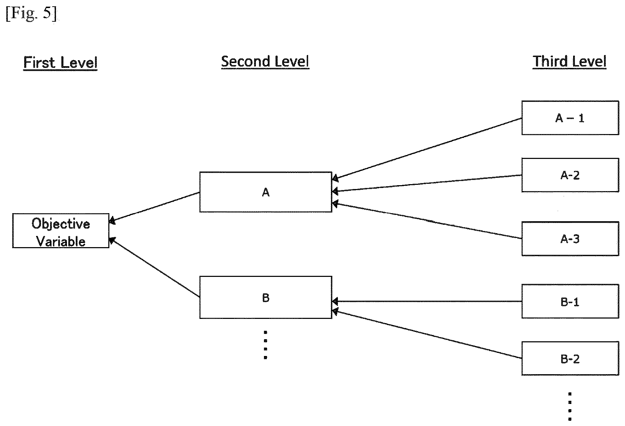

Fig. 5 is a drawing describing the multivariate analysis means according to the embodiment.

The multivariate analysis means of the embodiment conducts (a) the multiple regression analysis of the second level and the third level, (b) an analysis of a simple correlation of the evaluation factors in the third level, (c) the multiple regression analysis of the first level and the second level, and (d) an analysis of a simple correlation of the evaluation factors in the second level. In this embodiment, by conducting a hierarchical multiple regression analysis, an explanatory power of the influence (contribution degree) of the evaluation factor of the second level on the recommendation intention or the revisit intention can be enhanced. In other words, when the multiple regression analysis is conducted using the evaluation factor of the third level as the explanatory variable and the evaluation value for the evaluation item of the first level as the objective variable, it cannot be accurately obtained which evaluation factor is dominant in some cases, but in this embodiment, this problem is solved by setting the evaluation factor of the second level as an intermediate concept.

The analysis (a) is a first multiple regression analysis using the evaluation items of the second level as the objective variables (intermediate objective variables) and the evaluation items of the third level as the explanatory variables. This analysis allows obtaining the evaluation item (evaluation factor) of the third level that affects the evaluation item (intermediate objective variable) of the second level. For example, in Fig. 3, the influence (contribution degree) of each of the evaluation of food taste (B-1), the evaluation of food selection (B-2), and the evaluation of food quantity (B-3) on the evaluation of food (B) can be quantified.

In the analysis (b), the correlation between the evaluation factors of the third level is quantified. For example, in Fig. 3, in the case where the high correlation between the evaluation of food selection (B-2) and the evaluation of food quantity (B-3) is recognized by the simple correlation analysis method, it is found that when the evaluation of one becomes better, the evaluation of the other also becomes better.

The analysis (c) is a second multiple regression analysis using the evaluation item of the first level as the objective variable and the evaluation items of the second level as the explanatory variables. This analysis allows obtaining the evaluation item (evaluation factor) of the second level that affects the evaluation item of the first level. For example, in Fig. 3, the influence (contribution degree) of each of (A) the evaluation of customer service, (B) the evaluation of food, (C) the evaluation of cleanliness, (D) the evaluation of space and atmosphere, and the (E) evaluation of cost performance on the recommendation intention or the revisit intention can be quantified.

In the analysis (d), the correlation between the evaluation factors of the second level is quantified. For example, in Fig. 3, in the case where the high correlation between (B) the evaluation of food and (E) the evaluation of cost performance is recognized by the simple correlation analysis method, it is found that when the evaluation of one becomes better, the evaluation of the other also becomes better.

Fig. 6 is a drawing illustrating an analysis result indicating the contribution degrees of the respective explanatory variables (evaluation factors) of the second level when the revisit intention of the first level is used as the objective variable in a specific eating place. In the example illustrated in Fig. 6, it is seen that the "cost performance" is the highest in contribution degree with respect to the revisit intention, and the contribution degree of the "customer service" is the next highest. Since the values of VIF of the respective explanatory variables are not large, it is seen that the problem of multicollinearity has not occurred. In Fig. 6, since the determination coefficient R2 is .711 and large, it is seen that the analysis provides a high explanatory power.

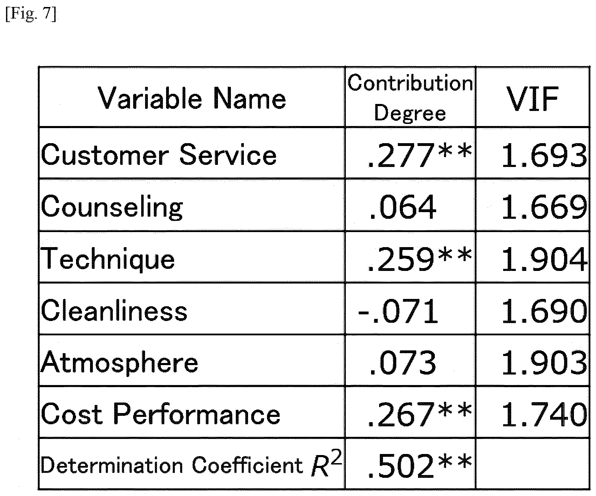

In this embodiment, "customer service," "counseling," "technique," "cleanliness," "atmosphere," and "cost performance" are set as the explanatory variables (evaluation factors) of the second level in a hair salon, and a monitoring survey with questions about the evaluation factors of the second level and questions of the evaluation items of the third level as a subordinate concept of the second level was conducted. Fig. 7 is a drawing illustrating an exemplary result of calculating contribution degrees of the respective explanatory variables (evaluation factors) of the second level with respect to the revisit intention (objective variable) of the customer by the multiple regression analysis when the target store is a hair salon. In the example illustrated in Fig. 7, it is seen that "customer service," "technique," and "cost performance," are high in contribution degree with respect to the revisit intention. Since the values of VIF of the respective explanatory variables are not large, it is seen that the problem of multicollinearity has not occurred. In Fig. 7, since the determination coefficient R2 is .502, it can be said that the analysis provides the sufficient explanatory power.

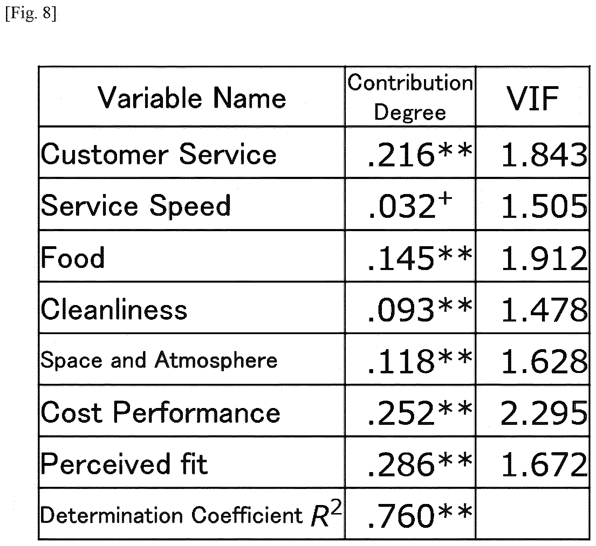

Fig. 8 is a drawing illustrating a result of multiple regression analysis in which the perceived fit is added to the explanatory variable (evaluation factor) of the second level, which is added to the result of multiple regression analysis of the eating place illustrated in Fig. 6. As illustrated in Fig. 8, by adding the perceived fit to the explanatory variable of the second level, the determination coefficient (R2) is improved to .760, and the values of VIF of the respective explanatory variables are not large, therefore, it is seen that the explanatory power was able to be improved.

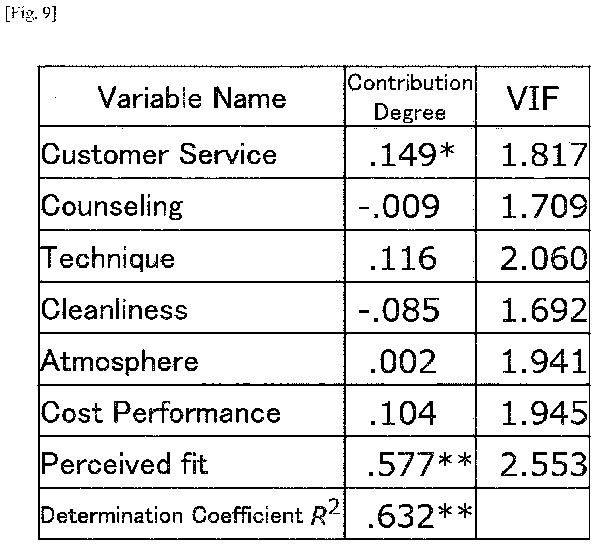

Fig. 9 is a drawing illustrating a result of multiple regression analysis in which the perceived fit is added to the explanatory variable (evaluation factor) of the second level, which is added to the result of multiple regression analysis of the hair salon illustrated in Fig. 7. As illustrated in Fig. 9, by adding the perceived fit to the explanatory variable of the second level, the determination coefficient (R2) is improved to .632, and the values of VIF of the respective explanatory variables are not large, therefore, it is seen that the explanatory power was able to be improved.

### (3) Analysis Result Output Means

The analysis result output means of the embodiment is configured not only to display the result of multiple regression analysis at one time point as illustrated in Fig. 6 to Fig. 9, but also to output a command to cause the management information terminal 20 to display a graph indicating the result of multiple regression analysis on a time-series basis. The objective variable contributing to the revisit intention dynamically varies corresponding to the improvement by the effort. For example, in Kano model known as a model of the quality that customers require, the element of the quality is classified into "Must-be Quality," "One-dimensional Quality," "Attractive Quality," "Indifferent Quality," and "Reverse Quality." In the eating place and the hair salon, the "cleanliness" corresponds to "Must-be Quality," and while the poor evaluation of cleanliness affects the revisit intention, when the evaluation of cleanliness is good, the further improvement of the cleanliness does not cause a positive influence on the revisit intention. When "Must-be Quality" is satisfied, the improvement of the other explanatory variables affects the revisit intention. Since changes in the relationships whereby improvements in one explanatory variable affect other explanatory variables differ across stores, the observation of the result of multiple regression analysis on a time-series basis contributes to the improvement of the revisit intention. The analysis result output means of the embodiment displays the result of multiple regression analysis on a time-series basis, thereby visualizing the change of the priority of the customer.

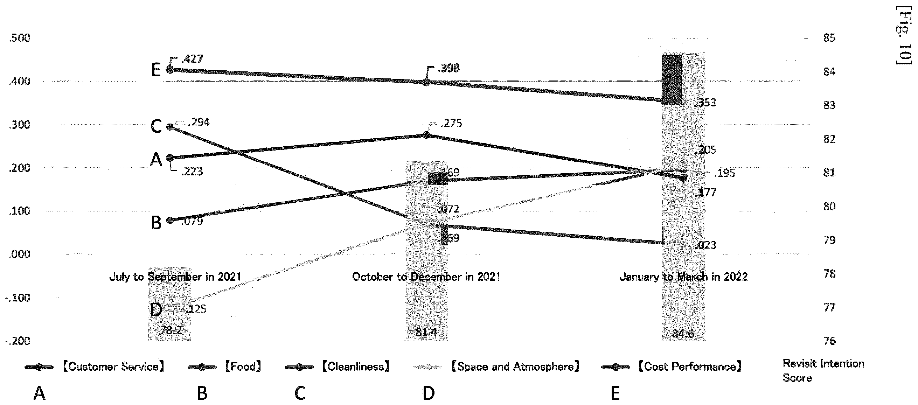

Fig. 10 is an exemplary graph in which the contribution degrees of the explanatory variables (respective evaluation factors) of the second level with respect to the revisit intention obtained by the multiple regression analysis are indicated on a time-series basis. The example illustrated in Fig. 10 indicates the transition in a specific eating place aggregated every three months, and the evaluation factors are "A customer service," "B food," "C cleanliness," "D space and atmosphere," and "E cost performance." A bar chart indicates the revisit intention score, and the answers of the customers willing to revisit the store are quantified.

In the example illustrated in Fig. 10, in a period of July to September in 2021, "C cleanliness" shows the second highest contribution degree, and "D space and atmosphere" shows the lowest contribution degree for the revisit intention score. In contrast, in a period of October to December in 2021 and a period of January to March in 2022, the contribution degree of "C cleanliness" is lowest, and the revisit intention score increases as the contribution degree of "D space and atmosphere" increases. It is seen from this that "C cleanliness" satisfies Must-be Quality as a result of the improvement effort of the store, and the improvement of "D space and atmosphere" is effective for improving the revisit intention score.

Thus, by providing the visualized transition of the contribution degrees of the respective evaluation factors with respect to the revisit intention score, which changes in association with the effort for the improvement of store, the analysis result output means can provide an insight into an effective effort for the improvement of store.

As described above, by conducting a multivariate analysis with a hierarchical structure of the objective variable and the evaluation factors, the information providing system 1 according to the embodiment can enhance the explanatory power of the influence (contribution degree) of each evaluation factor on the objective variable not provided with the sufficient explanatory power by a single multiple regression analysis.

By conducting the multiple regression analysis with the perceived fit added to the evaluation factor of the second level, each of the evaluation factors contributing to the revisit intention score can be analyzed with high accuracy.

In the information providing device 10 according to the embodiment, the transition of the contribution degrees of the respective evaluation factors with respect to the revisit intention score can be obtained based on the respective evaluation factors and the revisit intention scores obtained on a time-series basis. Specifically, as illustrated in Fig. 10, by obtaining the transition of the contribution degrees of the respective evaluation factors by fixing the evaluation factor of the second level for a fixed period of time, the transition of an improvement item of the target store can be explicitly indicated. This allows providing visualized information on how the evaluation factor contributing to the revisit intention score varies corresponding to the contents, the status of the improvement effort, and the external environment (customer segment, season, and the like) of the target store. For example, by visualizing the transition of the contribution degrees of the respective evaluation factors with respect to the revisit intention score to be linked with the contents of the improvement implemented by the target store, it can be visualized to be provided how the improvement implemented by the target store contributes to the revisit intention.

### <Second Embodiment>

An information providing system 1 according to the second embodiment includes the information providing device 10 that functions as a server, the management information terminal 20 that functions as a management client, the information terminal 30 that a customer uses, the survey data collecting device 40, and Internet 50, and the hardware configuration is the same as that of the first embodiment. The second embodiment is different from the first embodiment in that a multivariate analysis means of an analysis program 121 executed in the information providing device 10 has a comparative analysis function.

The comparative analysis function of the second embodiment has a function of conducting a primary multiple regression analysis using a primary evaluation factor group as the explanatory variable of the second level and a secondary multiple regression analysis using the primary evaluation factor group from which a specific evaluation factor is excluded as the explanatory variable of the second level, and outputting a difference value between both multiple regression analyses. The second embodiment relates to a multivariate analysis based on a monitoring survey in an eating place, and although a multiple regression analysis using questions of the third level as the explanatory variable is conducted in addition to a multiple regression analysis using questions of the second level as the explanatory variable similarly to the first embodiment, the explanation of the latter is omitted.

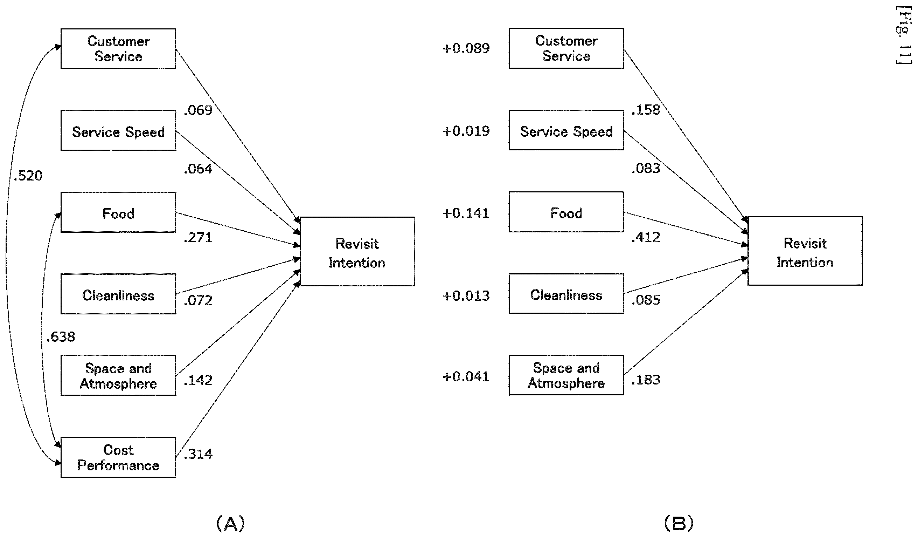

Fig. 11(A) is a drawing illustrating a result of primary multiple regression analysis, and Fig. 11(B) is a drawing illustrating a result of secondary multiple regression analysis. As illustrated in Fig. 11(A), in the primary multiple regression analysis, the revisit intention is used as the objective variable, and "customer service," "service speed," "food," "cleanliness," "space and atmosphere," and "cost performance" are used as the explanatory variables. From the primary multiple regression analysis, it is seen that the contribution degree of "cost performance" is the highest. Here, the comparative analysis function also has a function of calculating another evaluation factor highly relevant to a specific evaluation factor, and in Fig. 11 illustrates a relevance score ".638" of "food" and a relevance score ".520" of "customer service" highly relevant to "cost performance."

As illustrated in Fig. 11(B), in the secondary multiple regression analysis, the revisit intention is used as the objective variable, and the explanatory variables of the primary multiple regression analysis from which "cost performance" is excluded are used as the explanatory variables. In the secondary multiple regression analysis, the difference values from the contribution degrees of the respective explanatory variables in the primary multiple regression analysis can be indicated.

From the result of the secondary multiple regression analysis, when "cost performance" is excluded from the evaluation factors, "food" is "+0.141" and increased most, and it is seen also from the secondary multiple regression analysis that "food" has the largest influence on "cost performance."

The information providing system 1 according to the second embodiment described above has a function of conducting the primary multiple regression analysis using the primary evaluation factor group as the explanatory variable and the secondary multiple regression analysis using the primary evaluation factor group from which a specific evaluation factor is excluded as the explanatory variable, and outputting the difference value between both multiple regression analyses, and therefore, when the specific evaluation factor is excluded, the analysis of the effective improvement is facilitated.

The information providing device 10 according to the embodiment can also output the transition of the contribution degrees of the respective evaluation factors with respect to the revisit intention score obtained on a time-series basis as illustrated in Fig. 10.

### <Third Embodiment>

An information providing system 1 according to the third embodiment includes the information providing device 10 that functions as a server, the management information terminal 20 that functions as a management client, the information terminal 30 that a customer uses, the survey data collecting device 40, and Internet 50, and the hardware configuration is the same as that of the first embodiment. The third embodiment is different from the first embodiment in that a multivariate analysis means of an analysis program 121 executed in the information providing device 10 is configured to produce a factor analysis path diagram.

A comparative analysis function of the third embodiment relates to a multivariate analysis based on a monitoring survey in a supermarket, and similarly to the first embodiment, a multiple regression analysis using questions of the third level as the explanatory variable is also conducted in addition to a multiple regression analysis using questions of the second level as the explanatory variable.

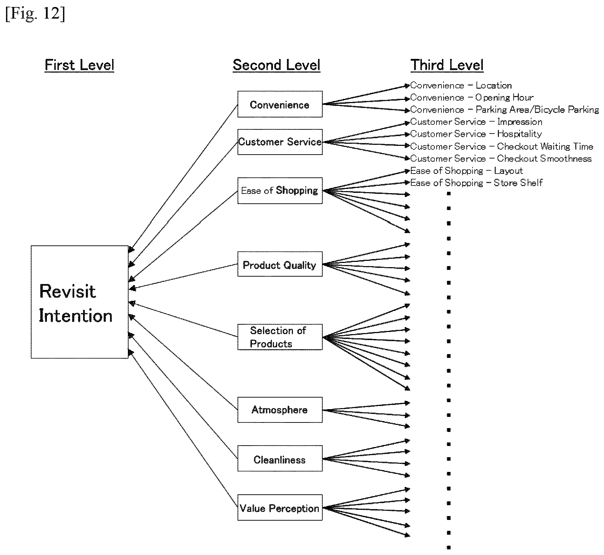

Fig. 12 is a drawing describing a first relational path diagram according to the third embodiment. The first the relational path diagram has a hierarchical structure similar to that of Fig. 5 having "revisit intention" as an evaluation item of the first level and "convenience" to "value perception" as evaluation items of the second level, and evaluation items, such as "location" and "opening hour," are indicated as evaluation items of the third level that explain the evaluation items of the second level. Although the values of the contribution degrees of the evaluation factors of the second level and the third level are not illustrated in Fig. 12, the values of the contribution degrees of the respective evaluation factors may be indicated together with the first relational path diagram.

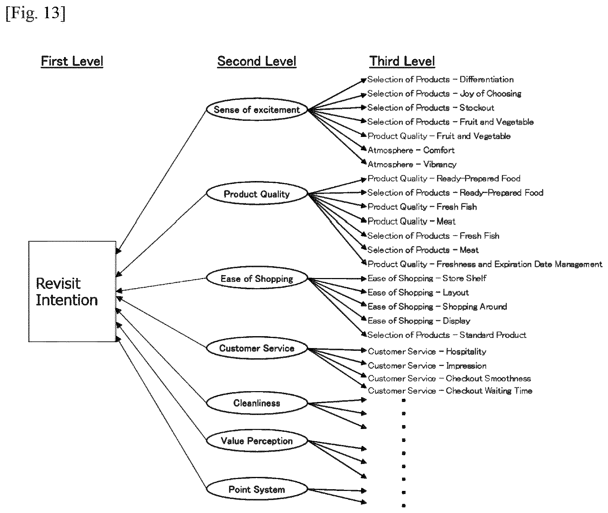

Fig. 13 is a drawing describing a second relational path diagram (factor analysis path diagram) according to the third embodiment. The factor analysis path diagram is produced by conducting a factor analysis on answers to the evaluation items of the third level to derive a common factor as a latent variable and using the derived common factor as the explanatory variable of the second level. For example, an evaluation factor of "sense of excitement" of the second level is a common factor of, in addition to "differentiation," "joy of choosing," "stockout," and "fruit and vegetable" of the third level subordinate to "selection of products" of the second level, "fruit and vegetable" of the third level subordinate to "selection of products" of the second level and "comfort" and "vibrancy" of the third level subordinate to "atmosphere" of the second level, and the common factor is named as "sense of excitement" by the inventors.

Note that the evaluation factor of the second level does not necessarily include only the derived latent variables, and the evaluation factors of the third level remaining after excluding the evaluation factor extracted as the common factor and the evaluation factors of the second level to which these remaining evaluation factors of the third level are subordinate are the same as those in the first relational path diagram in some cases (for example, in Fig. 12 and Fig. 13, "customer service" of the second level and the evaluation factors subordinate thereto are same).

The above-described information providing system 1 according to third embodiment has the function of producing not only the first relational path diagram but also the second relational path diagram (factor analysis path diagram), and therefore, the result of the multifaceted analysis of the factor dominantly affecting the objective variable of the first level can be visualized. According to the third embodiment, also from the aspect of the explanatory variable not fit into the question structure of the survey sheet of the monitoring survey and the questionnaire survey, the factor dominantly affecting the objective variable can be analyzed.

While the examples of the preferred embodiments of the present invention are described above, the technical scope of the present invention is not limited to the description of the embodiments. Various changes and modifications can be made in the examples of the embodiments, and configurations with the changes and modifications are also included in the technical scope of the present invention.

For example, the above-described embodiment exemplifies the configuration in which the contribution degrees of the respective evaluation factors with respect to the revisit intention score is obtained using the multiple regression analysis in the multivariate analysis, however, the configuration is not limited thereto, and a principal component analysis, a factor analysis, a correspondence analysis, a multidimensional scaling method, a cluster analysis, a path analysis, a variance analysis, a conjoint analysis, a regression analysis, a logistic regression analysis, and the like may be used.

In addition to the above-described embodiment, the information providing device 10 can have a configuration in which the evaluation factor contributing to the revisit intention is analyzed by collecting condition information, for example, the customer segment, the scene of use (daily use, anniversary use, and the like), season, and weather, and using the condition information as the explanatory variable.

While the example of analyzing the revisit intention or the recommendation intention for the specific store is described in the above-described embodiment, the information providing system according to the present invention can provide a graphically visualized result of executing a multivariate analysis using a repurchase intention or a recommendation intention for a specific product or service as an objective variable.

While the example using the survey data on the eating place and the hair salon as the target is described in the above-described embodiment, the present invention is applicable to other categories of business, and applicable to, for example, accommodation industry, food and beverage industry, entertainment industry, daily service industry, such as hair dressing and beauty and public bath, liberal arts and skill education industry, financial industry, insurance industry, retailing industry, information and communication industry, rental business, specialty service business (professionals and the like), advertising industry, real estate industry, and transportation industry.

Furthermore, while the configuration in which the factor contributing to the revisit intention to the target store is identified based on the respective evaluation factors and the revisit intention score of the target store is exemplified in the above-described embodiment, in addition to this configuration, a configuration in which the evaluation factor contributing to the revisit intention to the target store is identified using information on a store other than the target store can be employed. For example, the information providing device 10 can be configured to store the respective evaluation factors and the revisit intention scores of various stores other than the target store in a database, and provide the contribution degrees of the respective evaluation factors with respect to the revisit intention at a store with similar evaluation factors and revisit intention score (for example, with a difference within a specific range) among stores with the same feature, such as a category and a scale, as the analysis result of the target store. Further, the information providing device 10 can be configured to store information on the efforts of store improvement performed at various stores other than the target store and the transitions of the respective evaluation factors and the revisit intention scores in a database, and, for example, provide information indicative of what effort causes a change in the revisit intention and how the change is from the effort of store improvement at a store with similar evaluation factors and revisit intention data (for example, with a difference within a specific range) among stores with the same feature, such as a category and a scale, and the transitions of the contribution degrees of the respective evaluation factors and the revisit intention score caused by the effort of store improvement.

### DESCRIPTION OF REFERENCE SIGNS

- 1: Information providing system
- 10: Information providing device
- 20: Management information terminal
- 30: Information terminal
- 40: Survey data collecting device
- 50: Internet

## Claims

1. An information providing device comprising:
a survey data acquisition means configured to acquire evaluation data including evaluation values for evaluation items from customers, the evaluation data including evaluation values for evaluation items related to a revisit intention, repurchase intention, or recommendation intention for others;
a multivariate analysis means configured to calculate contribution degrees of explanatory variables with respect to an objective variable by conducting a multivariate analysis based on the evaluation data using an evaluation value for the revisit intention, repurchase intention, or recommendation intention for others as the objective variable, and evaluation values for evaluation items in the evaluation data as the explanatory variables; and
an analysis result output means configured to display an analysis result from the multivariate analysis means on an information terminal capable of communicating via a network,
wherein the evaluation data includes an evaluation item of a first level corresponding to the objective variable, evaluation items of a second level that explain the objective variable, and evaluation items of a third level that explain evaluation items of the second level, and
the multivariate analysis means is configured to execute a first multivariate analysis using an evaluation value for an evaluation item of the second level as an intermediate objective variable, and evaluation items of the third level as explanatory variables, and execute a second multivariate analysis using an evaluation item of the first level as an objective variable and evaluation items of the second level as explanatory variables.

2. The information providing device according to claim 1, wherein the analysis result output means is configured to concurrently display time-series variation of the explanatory variables and time-series variation of an evaluation value for the revisit intention, repurchase intention or recommendation intention for others on the information terminal.

3. The information providing device according to claim 2, wherein the time-series variation of the explanatory variables is time-series variation of evaluation values for evaluation items of the second level.

4. The information providing device according to claim 1, wherein evaluation values for evaluation items of the second level include an evaluation value for an evaluation item about a perceived fit.

5. The information providing device according to claim 1, wherein the multivariate analysis means is configured to execute:
a primary multivariate analysis to execute a first-first multivariate analysis using an evaluation value for an evaluation item of the second level as an objective variable, and evaluation values for evaluation items of the third level as explanatory variables, and a first-second multivariate analysis using an evaluation value for an evaluation item of the first level as an objective variable, and evaluation values for evaluation items of the second level as explanatory variables; and
a secondary multivariate analysis to execute a second-first multivariate analysis using an explanatory variable of the second level used in the primary multivariate analysis other than a specific explanatory variable as an objective variable, and evaluation values for evaluation items of the third level as explanatory variables, and a second-second multivariate analysis using evaluation values for evaluation items of the second level as explanatory variables, and
the multivariate analysis means further includes a function to output differences between contribution degrees of respective explanatory variables in the primary multivariate analysis and contribution degrees of respective explanatory variables in the secondary multivariate analysis.

6. The information providing device according to claim 1, wherein the multivariate analysis means includes a factor analysis multivariate analysis function to extract a common factor by conducting a factor analysis of evaluation values for evaluation items of the third level, and execute a multivariate analysis using the extracted common factor as an explanatory variable of the second level, and an evaluation value for an evaluation item of the first level as an objective variable, and
the analysis result output means further includes a function to display, based on the factor analysis multivariate analysis function, explanatory variables of the second level that explain an objective variable of the first level and contribution degrees of the explanatory variables of the second level, and explanatory variables of the third level that explain explanatory variables of the second level and contribution degrees of the explanatory variables of the third level on the information terminal in a tree structure.

7. The information providing device according to any one of claims 1 to 6, wherein evaluation items of the third level are evaluation items of a subordinate concept of evaluation items of the second level.

8. An information providing method executed by a computer, the method comprising:
a step of acquiring evaluation data including evaluation values for evaluation items from customers, the evaluation data including evaluation values for evaluation items related to a revisit intention, repurchase intention, or recommendation intention for others;
a step of calculating an evaluation value for the revisit intention, repurchase intention, or recommendation intention for others based on the evaluation data; and
a multivariate analysis step of calculating contribution degrees of explanatory variables with respect to an objective variable by conducting a multivariate analysis using an evaluation value for the revisit intention, repurchase intention, or recommendation intention for others as the objective variable, and evaluation values for evaluation items in the evaluation data as the explanatory variables,
wherein the information providing method includes displaying an analysis result in the multivariate analysis step on an information terminal capable of communicating via a network,
wherein the evaluation data includes an evaluation value for an evaluation item of a first level corresponding to the objective variable, evaluation values for evaluation items of a second level that explain the objective variable, and evaluation values for evaluation items of a third level that explain evaluation items of the second level, and
the multivariate analysis step includes executing a first multivariate analysis using an evaluation value for an evaluation item of the second level as an intermediate objective variable, and evaluation values for evaluation items of the third level as explanatory variables, and executing a second multivariate analysis using an evaluation value for an evaluation item of the first level as an objective variable, and evaluation values for evaluation items of the second level as explanatory variables.

9. A program that causes a computer to function as:
a means for acquiring evaluation data including evaluation values for evaluation items from customers, the evaluation data including evaluation values for evaluation items related to a revisit intention, repurchase intention, or recommendation intention for others;
a means for calculating an evaluation value for the revisit intention, repurchase intention, or recommendation intention for others based on the evaluation data; and
a multivariate analysis means for calculating contribution degrees of explanatory variables with respect to an objective variable by conducting a multivariate analysis using an evaluation value for the revisit intention, repurchase intention, or recommendation intention for others as the objective variable, and evaluation values for evaluation items in the evaluation data as the explanatory variables; and
a means for displaying an analysis result from the multivariate analysis means on an information terminal capable of communicating via a network,
wherein the evaluation data includes an evaluation value for an evaluation item of a first level corresponding to the objective variable, evaluation values for evaluation items of a second level that explain the objective variable, and evaluation values for evaluation items of a third level that explain evaluation items of the second level, and
the multivariate analysis means includes executing a first multivariate analysis using an evaluation value for an evaluation item of the second level as an intermediate objective variable, and evaluation values for evaluation items of the third level as explanatory variables, and executing a second multivariate analysis using an evaluation value for an evaluation item of the first level as an objective variable, and evaluation values for evaluation items of the second level as explanatory variables.
